# EUROPÄISCHE PATENTSCHRIFT

(11) **EP 2 789 030 B1**
(45) Veröffentlichungstag und Bekanntmachung des Hinweises auf die Patenterteilung: **07.10.2015**
(21) Anmeldenummer: 12795732.2
(22) Anmeldetag: 21.11.2012
(51) Int. Cl.: H01M 2/10

(54) **SPACER FÜR PRISMATISCHE BATTERIEZELLE, PRISMATISCHE BATTERIE MIT DEM SPACER UND VERFAHREN ZUM HERSTELLEN EINER PRISMATISCHEN BATTERIE**
SPACER FOR PRISMATIC BATTERY CELL, PRISMATIC BATTERY COMPRISING SAID SPACER AND METHOD FOR PRODUCING A PRISMATIC BATTERY
ÉLÉMENT D'ÉCARTEMENT POUR CELLULE DE BATTERIE PRISMATIQUE, BATTERIE PRISMATIQUE POURVUE DUDIT ÉLÉMENT D'ÉCARTEMENT ET PROCÉDÉ DE FABRICATION D'UNE BATTERIE PRISMATIQUE

(30) Priorität: 05.12.2011 DE 102011120187
(43) Veröffentlichungstag der Anmeldung: 15.10.2014
(73) Patentinhaber: Audi AG, 85045 Ingolstadt (DE)
(72) Erfinder: FEES, Heiner, 74321 Bietigheim-Bissingen (DE); TRACK, Andreas, 74343 Sachsenheim (DE); MAISCH, Ralf, 74232 Abstatt (DE); LANG, Bardo, 85114 Buxheim (DE)
(74) Vertreter: Herbst, Matthias Heinz
(86) Internationale Anmeldenummer: PCT/EP2012/004815
(87) Internationale Veröffentlichungsnummer: WO 2013/083237

(56) Entgegenhaltungen:
- WO-A1-2009/146196
- WO-A1-2010/076055
- WO-A1-2011/020595
- DE-A1-102010 013 031
- JP-A- 6 150 962
- JP-A- 2008 124 033
- US-A1- 2003 165 734

## Beschreibung

Die vorliegende Erfindung betrifft einen Spacer zum elektrischen Isolieren einer prismatischen Batteriezelle mit einem Spacerrahmen und einer zum Abdecken einer Breitseite der prismatischen Batteriezelle vorgesehenen und mit Kanten des Rahmens stoffschlüssig verbundenen Trennwand, eine prismatische Batterie mit einem derartigen Spacer sowie ein Verfahren zum Herstellen einer prismatischen Batterie unter Verwendung eines derartigen Spacer.

Prismatische Batteriezellen müssen untereinander und zu anderen Bauteilen hin elektrisch isoliert sein. Um diese Isolation zu erreichen, werden sogenannte "Spacer" verwendet, in die die prismatischen Batteriezellen eingesetzt werden.

So ist beispielsweise aus der DE 10 2009 037 849 ein Verfahren zum Herstellen einer elektrochemischen Zelle bekannt, wobei die elektrochemische Zelle einen Elektrodenstapel mit wenigstens zwei Elektroden aufweist, welche durch einen Separator voneinander getrennt sind, wenigstens zwei Stromableiter, die elektrisch mit den Elektroden verbunden sind, und eine aus wenigstens zwei Teilen bestehende Umhüllung, wobei in einem ersten Verfahrensschritt die die Stromableiter durch einen Formgebungsprozess mit einem Formteil verbunden werden und in einem zweiten Verfahrensschritt dieses Formteil mit der Umhüllung verbunden wird. Die Umhüllung besteht aus einer schalenartigen Struktur.

Derartige schalenartige Strukturen zur zumindest teilweisen Umhüllung von elektrochemischen Zellen werden nach dem Stand der Technik üblicherweise durch ein Kunststoffspritzgussverfahren hergestellt.

Durch Spritzgussverfahren sind Wandstärken von <1 mm nur sehr aufwändig herstellbar. Wenn eine fertige Batterie durch einen Stapel an gegenseitig elektrisch isolierten, prismatischen Batteriezellen hergestellt wird, stellt insbesondere bei beengten Platzverhältnissen oder bei einer erwünschten hohen Packungsdichte der prismatischen Batteriezellen die Dicke der verwendeten Spacer einen nicht zu vernachlässigenden Faktor dar.

Es ist Aufgabe der vorliegenden Erfindung, einen verbesserten Spacer zur Isolierung von prismatischen Batteriezellen, eine Batterie mit dem verbesserten Spacer sowie ein Verfahren zur Herstellung einer Batterie unter Verwendung des verbesserten Spacer zur Verfügung zu stellen.

Diese Aufgaben werden gelöst durch den Spacer gemäß Anspruch 1, die Batterie gemäß Anspruch 5 sowie das Verfahren gemäß Anspruch 6. Vorteilhafte Weiterbildungen der Erfindung sind Gegenstand der Unteransprüche.

Der erfindungsgemäße Spacer zum elektrischen Isolieren einer prismatischen Batteriezelle gegenüber einer weiteren prismatischen Batteriezelle oder einem anderen Bauteil weist einen Spacerrahmen mit einer Unter- und Oberkante und einer vorgebbaren Höhe zum Umschließen der Schmalseiten der prismatischen Batteriezelle auf und eine zum vollständigen Abdecken einer Breitseite der prismatischen Batteriezelle vorgesehene Trennwand mit einer ersten und zweiten Oberfläche, wobei die Unterkante des Spacerrahmens stoffschlüssig mit der ersten Oberfläche der Trennwand verbunden ist. Diese Trennwand ist erfindungsgemäße aus einer elektrisch isolierenden Kunststofffolie mit einer Dicke von 0,2 mm bis 0,8 mm ausgebildet.

Soweit in dieser Anmeldung die Begriffe "Unterkante" und "Oberkante" eines Spacerrahmens verwendet werden, stehen diese Begriffe synonym für "erste Kante" und "zweite Kante" des Spacerrahmens, und werden lediglich zur leichteren Veranschaulichung der Erfindung verwendet. Bei einer natürlichen Betrachtungsweise ist mit "Unterkante" diejenige Kante des Spacerrahmens gemeint, die bei einem flachen Aufliegen des Spacerrahmens auf einer waagerechten Unterlage näher zum Boden angeordnet ist. Dementsprechend ist die Oberkante diejenige Kante des Spacerrahmens, die hierbei einen größeren Abstand zum Boden aufweist.

Erfindungsgemäß umfasst der Spacer also mindestens einen Spacerrahmen, dessen eine Kante (Ober- oder Unterkante) formschlüssig mit einer Kunststofffolie mit einer Dicke zwischen von 0,2 mm bis 0,8 mm verbunden ist.

Wie oben ausgeführt, kann bei Spacer nach dem Stand der Technik, die unter Verwendung eines Kunststoffspritzgussverfahrens ausgebildet sind, eine Wandstärke der Trennwand, die eine vergleichsweise große Fläche aufweist, von <1 mm nur sehr aufwändig hergestellt werden. Im Gegensatz hierzu beträgt die Wandstärke der erfindungsgemäß verwendeten Kunststofffolie lediglich 0,2 mm bis 0,8 mm, beispielsweise 0,2 mm, 0,3 mm, 0,4 mm, 0,5 mm, 0,6 mm, 0,7 mm oder 0,8 mm.

Wenn eine prismatische Batterie durch einen Stapel von beispielsweise 10 bis 20 prismatischen Batteriezellen hergestellt ist, wobei zwischen den prismatischen Batteriezellen jeweils eine Trennwand zur elektrischen Isolation gegeneinander vorhanden ist, wird bei einer angenommenen Wandstärke der Trennwand nach dem Stand der Technik von 1 mm im Vergleich zu einer angenommenen Wandstärke der Kunststofffolie gemäß der vorliegenden Erfindung von beispielsweise 0,5 mm gemäß der vorliegenden Erfindung aufgrund der beispielsweise 9 bis 19 Stück verwendeter erfindungsgemäßer Trennwände eine Verringerung der Gesamtlänge der prismatischen Batterie von 4,5 mm bis 9,5 mm erreicht.

Bezüglich des Materials des Spacerrahmens des erfindungsgemäßen Spacer bestehen keine besonderen Anforderungen und es kann jedes geeignete Material verwendet werden. Üblicherweise besteht der Spacerrahmen oder Teile davon aus einem thermoplastischen Kunststoff. Um einen Verlust an Elektrolyt zu vermeiden oder zu verringern, kann der Spacerrahmen zusätzlich eine Diffusionssperre aufweisen oder enthalten, beispielsweise in Form eines metallischen Einsatzes, der von Kunststoff umspritzt ist.

Die Größe (Innenlänge, Innenbreite) des Spacerrahmens wird in vorteilhafter Weise so gewählt, dass bei einem Einfügen einer prismatischen Batteriezelle in den Spacerrahmen die Seitenwände der Batteriezelle und die Wände des Spacerrahmens bündig aneinandergrenzen. Die Größe des Spacerrahmens kann je nach Anwendungsfall jedoch auch abweichend hiervon gewählt werden.

An der Außenseite des Spacerrahmens können eine oder mehrere Vorsprünge vorhanden sein, beispielsweise in Form von Zapfen mit rechteckigem oder rundem Querschnitt, die sich von der äußeren Oberfläche des Spacerrahmens nach außen hin erstrecken. Sofern mehrere derartige Vorsprünge am Spacerrahmen vorhanden sind, können diese an einer Seite oder an mehreren Seiten des Spacerrahmens angeordnet sein. Bereits durch einen einzigen derartigen Vorsprung kann erreicht werden, dass entweder eine fertig gestellte prismatische Batterie nur in einer bestimmten Ausrichtung in eine entsprechend ausgestaltete Batteriehalterung eingesetzt werden kann oder dass die prismatische Batterie innerhalb einer Batteriehalterung verrutschungssicher gehalten wird. Die Batteriehalterung kann hierzu beispielsweise an ihren Innenseiten zu den Vorsprüngen des Spacerrahmens komplementäre Vertiefungen aufweisen.

Die Höhe des Spacerrahmens kann in geeigneter Weise gewählt werden, beispielsweise zwischen etwa 25% und 100% der Höhe der Schmalseiten der für den Spacer vorgesehenen prismatischen Batteriezelle. Beträgt die Höhe des Spacerrahmens beispielsweise 25% der Höhe der Schmalseiten der prismatischen Batteriezelle, kann die prismatische Batteriezelle durch einen zweiten Spacer elektrisch isoliert werden, dessen Spacerrahmen eine Höhe von 75% der Höhe der Schmalseiten der prismatischen Batteriezelle aufweist. Dieser zweite Spacer kann die gleiche Trennwand wie der erste Spacer aufweisen oder eine herkömmliche, durch ein Spritzgussverfahren hergestellte Trennwand. Diese letztgenannte Alternative wird man beispielsweise dann in Betracht ziehen, wenn die Trennwand die Außenhülle der fertig gestellten prismatischen Batterie bildet und diese Außenhülle einer Belastung ausgesetzt sein könnte, bei nicht ausgeschlossen werden kann, dass die für den erfindungsgemäßen Spacer verwendete Kunststofffolie dieser Belastung nicht standhalten könnte.

Beträgt die Höhe des Spacerrahmens beispielsweise 100% der Höhe der Schmalseiten der prismatischen Batteriezelle, erfolgt eine elektrische Isolierung der nicht durch eine Trennwand abgedeckten Breitseite der prismatischen Batteriezelle üblicherweise durch eine geeignete Abdeckung. Eine solche Abdeckung kann beispielsweise durch einen weiteren erfindungsgemäßen Spacer erfolgen, wobei die dem Spacerrahmen des weiteren Spacer gegenüberliegende Oberfläche der Trennwand stoffschlüssig mit dem Spacerrahmens des ersten Spacer verbunden wird, durch eine für den erfindungsgemäßen Spacer verwendete Kunststofffolie, oder durch eine andere geeignete Abdeckung.

Des Weiteren kann der Spacerrahmen Öffnungen oder Aussparungen für die Stromableiter der prismatischen Batteriezelle aufweisen. Weist die prismatische Batteriezelle beispielsweise zwei Stromableiter auf, die an verschiedenen Stellen aus der Höhenmitte ihrer Schmalseiten hervorstehen, und hat der Spacerrahmen beispielsweise eine Höhe, die der Höhe der Schmalseiten der in sie zu platzierenden prismatischen Batteriezelle entspricht, kann er an korrespondierenden Stellen geeignete Öffnungen zum Durchtritt der Stromabnehmer aufweisen. Beträgt die Höhe des Spacerrahmens bei dem gewählten Beispiel etwa 50% der Höhe der Schmalseiten der in sie zu platzierenden prismatischen Batteriezelle, kann er an den Stellen, die den Austrittsstellen der Stromableiter der prismatischen Batteriezelle entsprechen, geeignete Aussparungen aufweisen. Diese Öffnungen bzw. Aussparungen sind in der fertig gestellten prismatischen Batterie selbstverständlich in geeigneter Weise gegen die äußere Umwelt abgedichtet.

Erfindungsgemäß sind die Unterkante des Spacerrahmens und die erste Oberfläche der Trennwand (Kunststofffolie) stoffschlüssig miteinander verbunden. Ein stoffschlüssiges Verbinden kann entweder durch ein Verschweißen des Materials des Spacerrahmens mit dem Material der Kunststofffolie erfolgen oder durch die Verwendung eines geeigneten Klebmittels oder Kleb-Dichtmittels. Je nach verwendetem Material für den Spacerrahmen und die Trennwand kann ein Fachmann unter Berücksichtigung der relevanten Parameter (z.B. erforderliche Lebensdauer, zu erwartende mechanische, thermische und chemische Belastung) ein geeignetes Klebmittel oder Dicht-Klebmittel auswählen bzw. durch einige wenige Versuche ein geeignetes Klebmittel oder Dicht-Klebmittel herausfinden. Gleiches gilt für die Merkmale eines zu verwendenden Verschweißungsverfahrens.

Oftmals erfolgt ein Verschweißen des Materials der Kante eines Spacerrahmens mit der Kunststofffolie durch die Bedingungen, die bei einem Aufspritzen eines Spacerrahmen auf die Kunststofffolie gegeben sind.

Gemäß einer ersten vorteilhaften Weiterbildung der Erfindung weist der Spacer nicht nur einen ersten Spacerrahmen auf der ersten Oberfläche der Kunststofffolie, sondern auch einen zweiten Spacerrahmen auf der zweiten Oberfläche der Kunststofffolie auf, wobei die beiden Spacerrahmen deckungsgleich angeordnet sind und der zweite Spacerrahmen mit seiner Oberkante stoffschlüssig mit der Kunststofffolie verbunden ist.

Unter "deckungsgleich" ist zu verstehen, dass die beiden Spacerrahmen bei vertikaler Draufsicht ohne Versatz übereinander angeordnet sind und den gleichen Grundriss aufweisen. Für das "stoffschlüssige Verbinden" gelten die obigen entsprechenden Ausführungen.

Die Summe der Höhen des ersten und zweiten Spacerrahmen entspricht hierbei in vorteilhafter Weise der Dicke der prismatischen Batteriezelle, für die der erfindungsgemäße Spacer vorgesehen ist. In noch vorteilhafterer Weise beträgt die Höhe sowohl des ersten als auch des zweiten Spacerrahmens jeweils 50% der Dicke dieser prismatischen Batteriezelle.

Bei einer Herstellung einer prismatischen Batterie mit einer Mehrzahl an prismatischen Batteriezellen ergibt sich bei dieser Weiterbildung des erfindungsgemäßen Spacerrahmen der Vorteil, dass eine in den ersten Spacerrahmen eines ersten Spacer eingefügte prismatische Batteriezelle leicht durch den zweiten Spacerrahmen eines zweiten Spacer elektrisch isoliert werden kann. Wenn beispielsweise die Größe der Spacerrahmen so gewählt ist, dass bei einem Einfügen einer prismatischen Batteriezelle in den ersten Spacerrahmen die Seitenwände der Batteriezelle und die Wände des ersten Spacerrahmens bündig aneinandergrenzen, gilt gleiches auch für den zweiten Spacerrahmen. Hierdurch werden die Seiten der Spacerrahmen des ersten und zweiten Spacer, wenn sie gemeinsam (d.h. von oben und unten) die Schmalseiten der prismatischen Batteriezelle umgeben, automatisch deckungsgleich zueinander angeordnet und können in diesem Zustand leicht deckungsgleich und stoffschlüssig miteinander verbunden werden.

Da der erfindungsgemäße Spacer gemäß dieser Weiterbildung der Erfindung auf der dem ersten Spacerrahmen gegenüberliegenden Seite der Trennwand (Kunststofffolie) einen zweiten Spacerrahmen aufweist, und dieser deckungsgleich zum ersten Spacerrahmen angeordnet ist, kann auf einfache Weise eine gestapelte Anordnung einer Mehrzahl an Spacer und prismatische Batteriezellen erreicht werden.

Die für die erfindungsgemäßen Spacer verwendete elektrisch isolierende Kunststofffolie muss eine geeignete Durchschlagfestigkeit (dielektrische Widerstandsfähigkeit) aufweisen. Erfindungsgemäß ist es bevorzugt, dass die Kunststoffolie eine Durchschlagfestigkeit von 3 kV/mm oder größer aufweist (bestimmt gemäß ISO Testverfahren ICE 60243).

Als Beispiele für geeignete Kunststofffolien seien solche erwähnt, die aus einem geeigneten Polyester, beispielsweise Polybutylenterephthalat bestehen, oder einen solchen geeigneten Polyester enthalten (beispielsweise erhältlich unter den Markennamen Valox^{®} der SABIC Innovative Plastics IP BV oder Tecfilm^{®} der Dr. D. Müller GmbH). Als ein Beispiel für einen geeigneten Zusatzstoff für derartige Kunststofffolien, kommt beispielsweise Glasfaser in geeigneten Gewichtsanteilen in Betracht (z.B. Polybutylenterephthalat GF10).

Die vorliegende Erfindung umfasst auch eine prismatische Batterie mit mindestens einer prismatischen Batteriezelle, wobei die Batteriezelle in einem erfindungsgemäßen Spacer angeordnet ist.

Wie bereits in Bezug auf den erfindungsgemäßen Spacer ausgeführt, weist die erfindungsgemäße Batterie gegenüber Batterien nach dem Stand der Technik - bei jeweils gleicher Anzahl an Batteriezellen - den Vorteil auf, dass sie durch die Verwendung einer Trennwand in Form einer dünnen, elektrisch nicht leitenden Kunststofffolie eine geringere Gesamtlänge und auch ein geringeres Gewicht aufweist. Hierdurch ist es möglich, innerhalb eines für eine Batterie vorhandenen Bauraums eine größere Anzahl an Batteriezellen vorzusehen, oder es kann ein kleinerer Bauraum für die erfindungsgemäße Batterie vorgesehen sein, ohne dass im Vergleich zum Stand der Technik hiermit eine Einschränkung in Bezug auf die Kapazität der einsetzbaren Batterie verbunden wäre.

Das erfindungsgemäße Verfahren zum Herstellen einer prismatischen Batterie umfasst die die folgenden Schritten: (a) Bereitstellen eines ersten und eines zweiten Spacer gemäß der ersten vorteilhaften Weiterbildung der vorliegenden Erfindung; (b) Einlegen einer prismatischen Batteriezelle, deren Schmalseiten eine Höhe aufweisen, die der Summe der Höhen der ersten und zweiten Spacerrahmen entspricht, in den ersten Rahmen des ersten Spacer derart, dass eine Breitseite der prismatischen Batteriezelle auf der Oberfläche der Kunststofffolie aufliegt; und (c) stoffschlüssiges und deckungsgleiches Verbinden der Oberkante des ersten Spacerrahmens des ersten Spacer mit der Unterkante des zweiten Spacerrahmens des zweiten Spacer.

Das erfindungsgemäße Verfahren kann weiter die Schritte umfassen: (d) Einlegen einer zweiten prismatischen Batteriezelle in den ersten Spacerrahmen des zweiten Spacer derart, dass eine Breitseite der prismatischen Batteriezelle auf der Oberfläche der Kunststofffolie des zweiten Spacer aufliegt, und stoffschlüssiges und deckungsgleiches Verbinden der Oberkante des erste Spacerrahmens des zweiten Spacer mit der Unterkante des zweiten Spacerrahmens eines weiteren Spacer gemäß der ersten vorteilhaften Weiterbildung der vorliegenden Erfindung; und (e) gegebenenfalls, eine ein- oder mehrmalige Wiederholung von Schritt (d) unter Verwendung des weiteren Spacer, einer oder mehrerer weiterer prismatischer Batteriezellen und eines oder mehrerer noch weiterer Spacer gemäß der ersten vorteilhaften Weiterbildung der Erfindung.

Zum elektrischen Isolieren der äußersten Batteriezelle(n) gegen die Umwelt (beispielsweise zu anderen Bauteilen), genauer der außen liegenden Breitseite(n) der prismatischen Batteriezelle(n) kann diese beispielsweise entweder mit einem Spacer gemäß Anspruch 1 verschlossen werden oder mit einer anderen geeigneten Abdeckung mit einem geeigneten Spacerrahmen.

Das stoffschlüssige Verbinden der Kanten der Spacerrahmen der Spacer miteinander kann durch jedes geeignete Verfahren und unter Verwendung von allen geeigneten Mitteln durchgeführt werden. Erfindungsgemäß ist es bevorzugt, dass das stoffschlüssige Verbinden unter Verwendung einer Dicht-Klebemasse erfolgt. Ein bevorzugtes Beispiel einer solchen Dicht-Klebemasse ist eine auf Basis von Polyurethan. Ein Fachmann kann unter Berücksichtigung der relevanten Parameter (z.B. erforderliche Lebensdauer, zu erwartende mechanische, thermische und chemische Belastung) ein geeignetes Klebmittel oder Dicht-Klebmittel auswählen bzw. durch einige wenige Versuche ein geeignetes Klebmittel oder Dicht-Klebmittel herausfinden.

Bezüglich der Materialien und Verfahren zur Umhüllung der prismatischen Batteriezelle wird ein Fachmann auch berücksichtigen, dass die Batteriezelle flüssigkeits- und gasdicht geschlossen sein muss, um einen Materialaustausch mit der Umgebung zu verhindern. Dies gilt für die gesamte Umhüllung der Batteriezelle, also die Verbindung von Spacerrahmen mit der Kunststofffolie, die Verbindung zwischen Spacerrahmen und Spacerrahmen und die Abdichtung von Öffnungen oder Aussparungen zum Durchtritt der Stromableiter der Batteriezelle.

Erfindungsgemäß kann es sich bei der prismatischen Batteriezelle und der prismatischen Batterie um eine Primärbatterie oder eine Sekundärbatterie handeln. Die prismatische Batteriezelle umfasst typischerweise einen Elektrodenstapel mit wenigstens zwei Elektroden (Anode und Kathode), die durch einen Separator zumindest teilweise voneinander getrennt sind. Die Abfolge von Anode, Separator und Kathode kann sich innerhalb des Elektrodenstapels mehrmals wiederholen. Die Elektroden sind jeweils mit einem Stromableiter elektrisch verbunden, der sich in der fertig gestellten Batterie nach Außen erstreckt. An der Außenseite der fertig gestellten Batterie können die Stromableiter eines jeden Pols z.B. mittels einer Stromschiene elektrisch miteinander verbunden sein. Die Stromableiter und die Stromschiene bestehen aus elektrisch leitendem Material.

Die vorliegende Erfindung wird nachfolgend weiter durch Beschreibung von Ausführungsbeispielen unter Bezugnahme auf die beigefügten Figuren näher erläutert. Diese Ausführungsbeispiele dienen lediglich der weiteren Veranschaulichung der vorliegenden Erfindung, die Erfindung ist jedoch selbstverständlich nicht auf diese Ausführungsbeispiele beschränkt.

Dabei zeigt
- Fig. 1: eine Draufsicht auf einen Spacer 1 mit zwei auf einer fortlaufenden Kunststofffolie 2 aufgespritzte Spacerrahmen 3; und
- Fig. 2: eine Seitenansicht eines Spacer 1 mit zwei Spacerrahmen 3 und 5, die deckungsgleich mit ihrer Unterkante 6 bzw. Oberkante 9 stoffschlüssig mit einer Kunststofffolie 2 verbunden sind.

Die Darstellungen in den Figuren sind rein schematisch und nicht maßstabsgerecht.

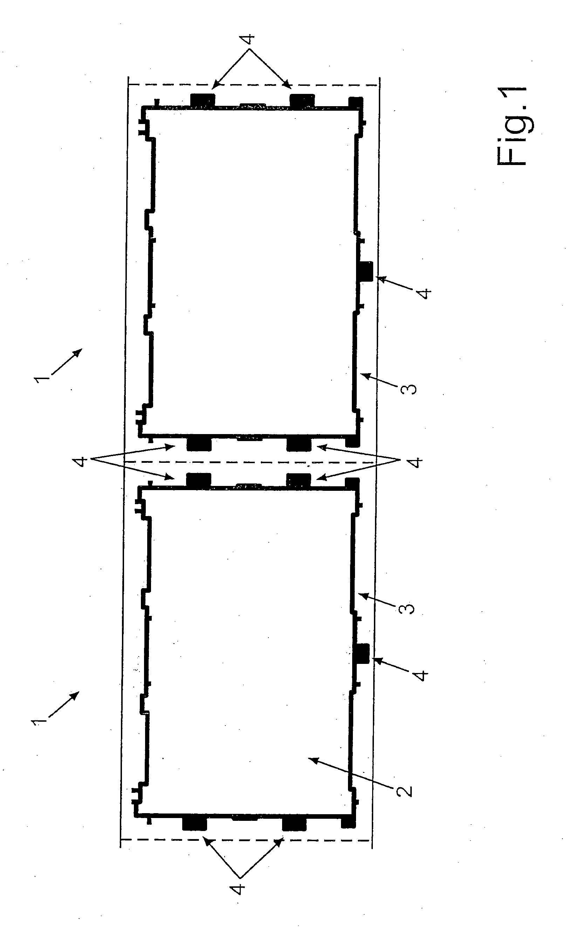

Wie im Beispiel gemäß Fig. 1 gezeigt, können einzelne, mehrere oder alle Spacerrahmen 3 an ihren kurzen und langen Seiten jeweils im wesentlichen horizontal nach außen weisende Vorsprünge 4 aufweisen. Durch solche Vorsprünge 4 kann sichergestellt werden, dass die fertig gestellte Batterie nur in einer bestimmten Ausrichtung in ein für die Batterie vorgesehenes und mit entsprechenden Vertiefungen versehenes Behältnis eingesetzt werden kann. Hierdurch kann zum einen ein Vertauschen der Stromableiter bzw. Stromschienen (Plus- und Minus-Pol) der Batterie beim Anschluss an einen elektrischen oder elektronischen Verbraucher verhindert und zum anderen ein fester Halt der Batterie in dem Behältnis erreicht werden.

Die Spacerrahmen 3 weisen, in der Fig. 1 nicht dargestellt, Öffnungen oder Aussparungen für die Stromableiter der Batteriezellen auf. Diese Öffnungen oder Aussparungen können beispielsweise im Bereich der langen Seite des Spacerrahmens 3 vorgesehen sein, der keinen Vorsprung 4 aufweist.

Wie in Fig. 1 ebenfalls schematisch dargestellt, ist vorgesehen, dass die Kunststofffolie 2 zwischen den Spacerrahmen 3 ohne Weiteres durchtrennbar ist. Hierdurch können die Spacerrahmen bei der automatisierten Montage von prismatischen Batterien leicht voneinander getrennt werden.

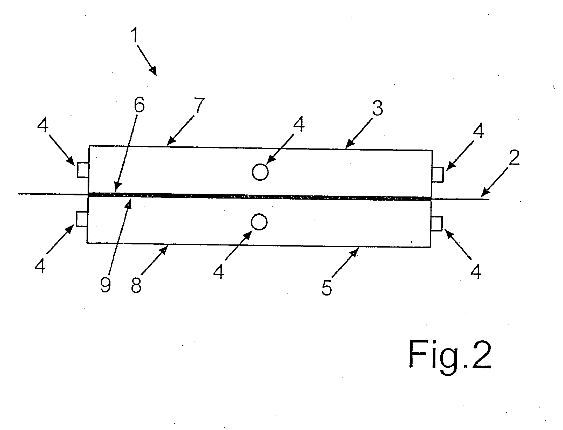

Die Spacerrahmen 3 sind in bevorzugter Weise deckungsgleich auf beiden Seiten der Kunststofffolie 2 aufgespritzt, wie in Fig. 2 dargestellt ist. Auf der ersten Oberfläche der Kunststofffolie 2 befindet sich ein erster Spacerrahmen 3, dessen Unterkante 6 stoffschlüssig mit der ersten Oberfläche der Kunststofffolie 2 verbunden ist. Ein zweiter Spacerrahmen 5 ist deckungsgleich zum ersten Spacerrahmen 3 auf der zweiten Seite der Kunststofffolie 2 angeordnet, wobei seine Oberkante 9 stoffschlüssig mit der zweiten Oberfläche der Kunsstofffolie 2 verbunden ist.

Wie oben bereits dargelegt ergeben sich hierdurch weitere Vorteile bei der Herstellung einer prismatischen Batterie mit einer Mehrzahl an prismatischen Batteriezellen. So können beispielsweise bei einer aus einem Stapel an prismatischen Batteriezellen ausgebildeten prismatischen Batterie jeweils die Oberkante 7 eines ersten Spacerrahmens 3 eines ersten Spacer 1 mit der Unterkante 8 eines zweiten Spacerrahmens 5 eines zweiten Spacer 1 formschlüssig miteinander verbunden werden.

Auch bei dem Beispiel gemäß Fig. 2 können die Spacerrahmen selbstverständlich in Reihe auf ein fortlaufendes Kunststoffband aufgespritzt sein, insoweit entsprechend dem in Fig. 1 gezeigten Beispiel.

Durch das Aufspritzen von Spacerrahmen 3 oder 3 und 5 in Reihe auf eine fortlaufende Kunststofffolie 2 (auch bekannt als "In Mold Decoration") besteht die Möglichkeit, dass die umspritzte Kunststofffolie auf Coil gewickelt und bis zur Modulmontage geliefert werden kann. Durch einen ausreichend großen Durchmesser der Coil kann eine geringe Krümmung der aufgespritzten Spacer 1 erreicht werden, wodurch eine Beeinträchtigung der Qualität der aufgespritzten Spacer 1 und/oder Probleme bei der Modulmontage vermieden werden können.

Durch die vorliegende Erfindung werden insbesondere folgende Vorteile erreicht:
- Das Material und die Dicke der Kunststofffolie ist unter Berücksichtigung der Herstellungs- und Einsatzbedingungen wählbar;
- Die aufwändige Herstellung einer großen Fläche mit dünner Wandstärke mittels eines Spritzgussverfahrens entfällt;
- Die Dickentoleranzen bei Kunststofffolie sind geringer als im Spritzgussverfahren, dadurch ergeben sich geringere Toleranzen bezüglich der Länge des fertigen Batterie-Moduls;
- Die Modullänge ist bei gleicher Anzahl an prismatischen Batteriezellen im Vergleich zum Stand der Technik kleiner, da ein dünneres Trennelement (Kunststofffolie) verwendet wird;
- Es gibt die Möglichkeit, die umspritzte Kunststofffolie (Spacer) auf ein Coil aufzuwickeln und "am Band" an die Modulmontage zu liefern.

## Patentansprüche

1. Spacer (1) zum elektrischen Isolieren einer prismatischen Batteriezelle gegenüber einer weiteren prismatischen Batteriezelle oder einem anderen Bauteil, mit einem ersten Spacerrahmen (3) mit einer Unter- und Oberkante und einer vorgebbaren Höhe zum Umschließen der Schmalseiten der prismatischen Batteriezelle und einer zum vollständigen Abdecken einer Breitseite der prismatischen Batteriezelle vorgesehenen Trennwand mit einer ersten und zweiten Oberfläche, wobei die Unterkante des Spacerrahmens (3) stoffschlüssig mit der ersten Oberfläche der Trennwand verbunden ist, und
die Trennwand aus einer elektrisch isolierenden Kunststofffolie (2) mit einer Dicke von 0,2 mm bis 0,8 mm ausgebildet ist,
**dadurch gekennzeichnet, dass**
deckungsgleich zum ersten Spacerrahmen (3) ein zweiter Spacerrahmen (5) auf der zweiten Oberfläche der Kunststofffolie (2) vorhanden ist, dessen Oberkante (9) stoffschlüssig mit der zweiten Oberfläche der Kunststofffolie (2) verbunden ist, und
jeder Spacerrahmen (3) zusammen mit der Kunststofffolie (2) einen Raum zum Einlegen einer prismatischen Batteriezelle ausbildet, derart, dass eine Breitseite der prismatischen Batteriezelle auf der Oberfläche der Kunststofffolie auflegbar ist.

2. Spacer (1) gemäß Anspruch 1,
**dadurch gekennzeichnet, dass**
die Kunststofffolie (2) eine Durchschlagsfestigkeit von 3 kV/mm oder größer aufweist.

3. Spacer (1) gemäß Anspruch 1 oder 2,
**dadurch gekennzeichnet, dass**
die Kunststofffolie (2) aus Polybutylenterephthalat oder Polyester besteht oder Polybutylenterephthalat oder Polyester enthält.

4. Prismatische Batterie mit mindestens einer prismatischen Batteriezelle,
**dadurch gekennzeichnet, dass**
die Batteriezelle in einem Spacer (1) gemäß einem der Ansprüche 1 bis 3 eingelegt ist.

5. Verfahren zum Herstellen einer prismatischen Batterie, die folgenden Schritten umfassend:
(a) Bereitstellen eines ersten und eines zweiten Spacer (1) gemäß Anspruch 1;
(b) Einlegen einer prismatischen Batteriezelle, deren Schmalseite eine Höhe aufweist, die der Summe der Höhen der ersten und zweiten Spacerrahmen (3, 5) entspricht, in den ersten Spacerrahmen (3) des ersten Spacer (1) derart, dass eine Breitseite der prismatischen Batteriezelle auf der Oberfläche der Kunststofffolie (2) aufliegt; und
(c) Stoffschlüssiges und deckungsgleiches Verbinden der Oberkante (7) des ersten Spacerrahmens (3) des ersten Spacer (1) mit der Unterkante (8) des zweiten Spacerrahmens (5) des zweiten Spacer (1).

6. Verfahren nach Anspruch 5, weiter umfassend
(d) Einlegen einer zweiten prismatischen Batteriezelle in den ersten Spacerrahmen (3) des zweiten Spacer (1) derart, dass eine Breitseite der prismatischen Batteriezelle auf der Oberfläche der Kunststofffolie (2) des zweiten Spacer (1) aufliegt, und stoffschlüssiges und deckungsgleiches Verbinden der Oberkante (7) des ersten Spacerrahmens (3) des zweiten Spacer (1) mit der Unterkante (8) des zweiten Spacerrahmens (5) eines weiteren Spacer (1) gemäß Anspruch 2; und
(e) gegebenenfalls, eine ein- oder mehrmalige Wiederholung von Schritt (d) unter Verwendung des weiteren Spacer (1), einer oder mehrerer weiterer prismatischer Batteriezellen und eines oder mehrerer noch weiterer Spacer (1) gemäß Anspruch 2.

7. Verfahren gemäß Anspruch 5 oder 6,
**dadurch gekennzeichnet, dass**
das stoffschlüssige Verbinden der Kanten (7, 8) der Spacerrahmen (3, 5) unter Verwendung einer Dicht-Klebemasse erfolgt.

8. Verfahren gemäß Anspruch 7,
**dadurch gekennzeichnet, dass**
als Dicht-Klebemasse eine auf Basis von Polyurethan verwendet wird.

## Claims

1. Spacer (1) for electrically insulating a prismatic battery cell from another prismatic battery cell or another component, having a first spacer frame (3) with a lower edge and upper edge and a pre-definable height for enclosing the narrow sides of the prismatic battery cell and a partition wall for completely covering a broad side of the prismatic battery cell, said partition wall having a first and second surface, the lower edge of the spacer frame (3) being materially connected to the first surface of the partition wall, and
the partition wall being formed from an electrically insulating plastics film (2) with a thickness of 0.2 mm to 0.8 mm,
**characterised in that**
congruent with the first spacer frame (3) is a second spacer frame (5) on the second surface of the plastics film (2), the upper edge of which is materially connected to the second surface of the plastics film (2), and
each spacer frame (3) together with the plastics film (2) forms a space for the insertion of a prismatic battery cell, such that a broad side of the prismatic battery cell can be placed on the surface of the plastics film.

2. Spacer (1) according to claim 1, **characterised in that** the plastics film (2) has a dielectric strength of 3 kV/mm or more.

3. Spacer (1) according to claim 1 or 2, **characterised in that** the plastics film (2) consists of polybutylene terephthalate or polyester or contains polybutylene terephthalate or polyester.

4. Prismatic battery having at least one prismatic battery cell, **characterised in that** the battery cell is placed in a spacer (1) according to one of claims 1 to 3.

5. Method for producing a prismatic battery, comprising the following steps:
(a) preparing a first and a second spacer (1) according to claim 1;
(b) placing a prismatic battery cell, the narrow side of which has a height corresponding to the sum of the heights of the first and second spacer frames (3, 5), in the first spacer frame (3) of the first spacer (1) such that a broad side of the prismatic battery cell rests on the surface of the plastics film (2); and
(c) materially and congruently connecting the upper edge (7) of the first spacer frame (3) of the first spacer (1) to the lower edge (8) of the second spacer frame (5) of the second spacer (1).

6. Method according to claim 5, further comprising
(d) placing a second prismatic battery cell in the first spacer frame (3) of the second spacer (1) such that a broad side of the prismatic battery cell rests on the surface of the plastics film (2) of the second spacer (1), and materially and congruently connecting the upper edge (7) of the first spacer frame (3) of the second spacer (1) to the lower edge (8) of the second spacer frame (5) of a further spacer (1) according to claim 2; and
(e) optionally repeating step (d) one or more times using the further spacer (1), one or more further prismatic battery cells and one or more further spacers (1) according to claim 2.

7. Method according to claim 5 or 6, **characterised in that** the material connection of the edges (7, 8) of the spacer frames (3, 5) is carried out using an adhesive bonding compound.

8. Method according to claim 7, **characterised in that** the adhesive bonding compound used is one which is based on polyurethane.

## Revendications

1. Élément d'espacement (1) pour l'isolation électrique d'une cellule de batterie prismatique par rapport à une autre cellule de batterie prismatique ou à un autre composant, avec un premier cadre d'élément d'espacement (3) avec une arête inférieure et une arête supérieure et avec une hauteur pouvant être prescrite pour entourer les côtés étroits de la cellule de batterie prismatique et avec une paroi séparatrice prévue pour couvrir complètement un côté large de la cellule de batterie prismatique et munie d'une première et d'une deuxième surface, l'arête inférieure du cadre d'élément d'espacement (3) étant assemblée par adhérence à la première surface de la paroi séparatrice, et
la paroi séparatrice étant constituée d'une feuille plastique (2), électriquement isolante, ayant une épaisseur de 0,2 mm à 0,8 mm,
**caractérisé en ce que**
coïncidant avec le premier cadre d'élément d'espacement (3), il est prévu sur la deuxième surface de la feuille plastique (2) un deuxième cadre d'élément d'espacement (5) dont l'arête supérieure (9) est assemblée par adhérence à la deuxième surface de la feuille plastique (2), et
chaque cadre d'élément d'espacement (3) forme conjointement avec la feuille plastique (2) un espace pour insérer une cellule de batterie prismatique de telle sorte qu'un côté large de la cellule de batterie prismatique peut être posé sur la surface de la feuille plastique.

2. Élément d'espacement (1) selon la revendication 1, **caractérisé en ce que** la feuille plastique (2) présente une résistance à la percussion de 3 kV/mm ou plus.

3. Élément d'espacement (1) selon la revendication 1 ou 2, **caractérisé en ce que** la feuille plastique (2) est en polytéréphtalate de butylène ou en polyester ou contient du polytéréphtalate de butylène ou du polyester.

4. Batterie prismatique avec au moins une cellule de batterie prismatique, **caractérisée en ce que** la cellule de batterie est insérée dans un élément d'espacement (1) selon l'une des revendications 1 à 3.

5. Procédé de fabrication d'une batterie prismatique, qui comprend les étapes suivantes :
(a) préparation d'un premier et d'un deuxième élément d'espacement (1) selon la revendication 1 ;
(b) insertion d'une cellule de batterie prismatique, dont le côté étroit a une hauteur qui correspond à la somme des hauteurs des premier et deuxième cadres d'élément d'espacement (3, 5), dans le premier cadre d'élément d'espacement (3) du premier élément d'espacement (1) de telle sorte qu'un côté large de la cellule de batterie prismatique repose sur la surface de la feuille plastique (2) ; et
(c) assemblage coïncidant et par adhérence de l'arête supérieure (7) du premier cadre d'élément d'espacement (3) du premier élément d'espacement (1) à l'arête inférieure (8) du deuxième cadre d'élément d'espacement (5) du deuxième élément d'espacement (1).

6. Procédé selon la revendication 5, comprenant en outre :
(d) l'insertion d'une deuxième cellule de batterie prismatique dans le premier cadre d'élément d'espacement (3) du deuxième élément d'espacement (1), de telle sorte qu'un côté large de la cellule de batterie prismatique repose sur la surface de la feuille plastique (2) du deuxième élément d'espacement (1), et l'assemblage coïncidant et par adhérence de l'arête supérieure (7) du premier cadre d'élément d'espacement (3) du deuxième élément d'espacement (1) à l'arête inférieure (8) du deuxième cadre d'élément d'espacement (5) d'un autre élément d'espacement (1) selon la revendication 2 ; et
(e) le cas échéant, la répétition, une ou plusieurs fois, de l'étape (d) en utilisant l'autre élément d'espacement (1), une ou plusieurs autres cellules de batterie prismatique et un ou plusieurs autres éléments d'espacement (1) selon la revendication 2.

7. Procédé selon la revendication 5 ou 6, **caractérisé en ce que** l'assemblage par adhérence des arêtes (7, 8) des cadres d'élément d'espacement (3, 5) s'effectue en utilisant une colle d'étanchéité.

8. Procédé selon la revendication 7, **caractérisé en ce que** l'on utilise comme colle d'étanchéité une colle à base de polyuréthane.
